# EUROPÄISCHE PATENTSCHRIFT

(11) **EP 3 436 223 B1**
(45) Veröffentlichungstag und Bekanntmachung des Hinweises auf die Patenterteilung: **28.09.2022**
(21) Anmeldenummer: 17713925.0
(22) Anmeldetag: 27.03.2017
(51) Int. Cl.: B25J 9/04, B25J 9/10, B25J 19/00, B05B 13/04

(54) **BESCHICHTUNGSROBOTER**
COATING ROBOT
ROBOT POUR APPLIQUER UN REVÊTEMENT

(30) Priorität: 01.04.2016 DE 102016003966
(43) Veröffentlichungstag der Anmeldung: 06.02.2019
(73) Patentinhaber: Dürr Systems AG, 74321 Bietigheim-Bissingen (DE)
(72) Erfinder: COLLMER, Andreas, 71665 Vaihingen/Enz (DE); HEIN, Steffen, 74243 Langenbrettach (DE); HEZEL, Thomas, 71679 Asperg (DE)
(74) Vertreter: v. Bezold & Partner Patentanwälte - PartG mbB
(86) Internationale Anmeldenummer: PCT/EP2017/057178
(87) Internationale Veröffentlichungsnummer: WO 2017/167683

(56) Entgegenhaltungen:
- EP-A1- 1 930 129
- WO-A1-2012/028197
- DE-A1- 10 010 615
- DE-U1-202013 104 544
- JP-A- H02 298 482
- JP-A- 2015 085 469
- US-A1- 2012 325 142

## Beschreibung

Die Erfindung betrifft einen Beschichtungsroboter zur Beschichtung von Bauteilen, insbesondere einen Lackierroboter zur Lackierung von Kraftfahrzeugkarosseriebauteilen.

Aus dem Stand der Technik (z. B. DE 10 2013 109 867 A1, EP 0 511 977 B1, EP 2 213 425 B1) sind Beschichtungsroboter bekannt, die insgesamt sieben bewegliche Achsen aufweisen, was einen großen Bewegungsspielraum ermöglicht. So verfügen diese bekannten Beschichtungsroboter über eine Roboterbasis, ein drehbares Roboterglied, einen proximalen Roboterarm ("Arm 1"), einen distalen Roboterarm ("Arm 2") und eine mehrachsige Roboterhandachse. Der proximale Roboterarm ist hierbei in zwei Armteile unterteilt, die relativ zueinander um die Längsachse des proximalen Roboterarms drehbar sind. Hierbei führt eine Leitungsanordnung mit Fluidleitungen und Elektroleitungen von der Roboterbasis bis zu dem Anschlussflansch der Roboterhandachse, wobei die Leitungsanordnung im Bereich des proximalen Roboterarms außerhalb des proximalen Roboterarms verläuft, d. h. außerhalb der Achse zwischen den beiden Armteilen des proximalen Roboterarms. Das Drehlager zwischen den beiden relativ zueinander verdrehbaren Armteilen des proximalen Roboterarms wird also von der Leitungsanordnung an der Außenseite des proximalen Roboterarms umgangen.

Nachteilig an diesen bekannten Beschichtungsrobotern ist die Führung der Leitungsanordnung, die im Betrieb zu verschiedenen Problemen führt. Zum einen ragt die Leitungsanordnung über die Außenkontur des Beschichtungsroboters hinaus, was unerwünscht ist. Zum anderen wird die Leitungsanordnung hierbei auch mechanisch stark belastet.

Zum Stand der Technik ist auch hinzuweisen auf DE 100 10 615 A1, US 2006/0294628 A1, US 2013/0260606 A1, DE 694 02 405 T2, DE 10 2004 040 162 A1, DE 10 2010 024 260 A1, DE 101 39 088 A1, DE 10 2009 012 140 A1, DE 20 2013 105 910 U1, DE 20 2013 104 544 U1, US 2008/0223170 A1, US 2016/0089797 A1, WO 2012/028197 A1.

Zum technischen Hintergrund der Erfindung ist auch hinzuweisen auf JP H02 298482 A und US 2012/325142 A1.

Schließlich offenbart JP 2015 085 469 A einen Beschichtungsroboter gemäß dem Oberbegriff von Anspruch 1. Hierbei ist die Leitungsführung jedoch noch nicht optimal.

Der Erfindung liegt deshalb die Aufgabe zugrunde, einen entsprechend verbesserten Beschichtungsroboter zu schaffen.

Diese Aufgabe wird durch einen erfindungsgemäßen Beschichtungsroboter gemäß dem Hauptanspruch gelöst.

Der erfindungsgemäße Beschichtungsroboter weist zunächst in Übereinstimmung mit dem Stand der Technik eine Roboterbasis auf, die vorzugsweise ortsfest montiert ist.

Darüber hinaus weist der erfindungsgemäße Beschichtungsroboter in Übereinstimmung mit dem Stand der Technik ein drehbares Roboterglied auf, das an der Roboterbasis angebracht ist und relativ zu der Roboterbasis um eine erste Achse drehbar ist.

Weiterhin verfügt der erfindungsgemäße Beschichtungsroboter in Übereinstimmung mit dem Stand der Technik über einen proximalen Roboterarm, der entsprechend der üblichen Fachterminologie auch als "Arm 1" bezeichnet wird, wobei der proximale Roboterarm an dem drehbaren Roboterglied angebracht und relativ zu dem drehbaren Roboterglied um eine zweite Achse schwenkbar ist.

Der proximale Roboterarm ("Arm 1") besteht erfindungsgemäß aus zwei Armteilen, die mittels eines ersten Lagerrings relativ zueinander um eine dritte Achse drehbar sind, wobei die dritte Achse im Wesentlichen entlang der Längsachse des proximalen Roboterarms ausgerichtet ist. Die Drehbewegung der beiden Armteile des proximalen Roboterarms relativ zueinander erfolgt also im Wesentlichen um die Längsachse des proximalen Roboterarms.

Hierbei ist jedoch zu erwähnen, dass es im Rahmen der Erfindung nicht erforderlich ist, dass die dritte Achse exakt parallel zur Längsachse des proximalen Roboterarms ausgerichtet ist. Vielmehr reicht es im Rahmen der Erfindung aus, wenn die dritte Achse im Wesentlichen parallel zur Längsachse des proximalen Roboterarms ausgerichtet ist, wobei beispielsweise Winkelabweichungen von ±20°, ±10° oder ±5° möglich sind. Weiterhin ist in diesem Zusammenhang zu erwähnen, dass der proximale Roboterarm auch leicht geknickt oder gekrümmt sein kann.

Darüber hinaus umfasst der erfindungsgemäße Beschichtungsroboter einen distalen Roboterarm, der entsprechend der üblichen Fachterminologie auch als "Arm 2" bezeichnet wird, wobei der distale Roboterarm an dem proximalen Roboterarm angebracht ist und relativ zu dem proximalen Roboterarm um eine vierte Achse schwenkbar ist.

An dem distalen Roboterarm ist in Übereinstimmung mit dem Stand der Technik eine Roboterhandachse angebracht, die mehrere bewegliche Achsen aufweist, wie es an sich aus dem Stand der Technik bekannt ist. In einem bevorzugten Ausführungsbeispiel der Erfindung weist die Roboterhandachse drei bewegliche Achsen auf. Es ist jedoch im Rahmen der Erfindung beispielsweise auch möglich, dass die Roboterhandachse zwei bewegliche Achsen oder vier bewegliche Achsen aufweist.

An dem distalen Ende der Roboterhandachse befindet sich ein Anschlussflansch zum Anschluss eines Applikationsgerätes, wie beispielsweise eines Rotationszerstäubers.

Ferner umfasst der erfindungsgemäße Beschichtungsroboter in Übereinstimmung mit dem Stand der Technik eine Leitungsanordnung, die von der Roboterbasis zu dem Anschlussflansch für das Applikationsgerät geführt ist und zur Versorgung des Applikationsgerätes dient.

Der erfindungsgemäße Beschichtungsroboter zeichnet sich nun dadurch aus, dass die Leitungsanordnung durch den ersten Lagerring zwischen den beiden Armteilen des proximalen Roboterarms hindurch geführt ist. Dies bedeutet, dass die Leitungsanordnung in diesem Bereich im Inneren des proximalen Roboterarms verläuft und deshalb nicht nach außen über die Außenkontur des Beschichtungsroboters hinausragt.

In dem bevorzugten Ausführungsbeispiel der Erfindung sind die erste Achse zwischen der Roboterbasis und dem drehbarem Roboterglied und die zweite Achse zwischen dem drehbaren Roboterglied und dem proximalen Roboterarm im mathematischen Sinne windschief. Dies bedeutet, dass sich diese beiden Achsen nicht schneiden und nicht parallel zueinander verlaufen. Die erste Achse und die zweite Achse sind hierbei vorzugsweise in einem Achsabstand (im mathematischen Sinne das Gemeinlot) im Bereich von 10cm-55cm, 20cm-25cm oder 25cm-35cm angeordnet, wobei sich ein Achsabstand von 30cm zwischen der ersten Achse und der zweiten Achse als vorteilhaft erwiesen hat. Weiterhin ist zu erwähnen, dass die beiden relativ zueinander verdrehbaren Armteile des proximalen Roboterarms ("Arm 1") vorzugsweise über einen Drehwinkelbereich von mindestens 90°, 135°, 180°, 225° oder sogar mindestens 240° verdrehbar sind, um einen möglichst großen Bewegungsspielraum zu ermöglichen.

Bei dem bevorzugten Ausführungsbeispiel der Erfindung verläuft die erste Achse zwischen der Roboterbasis und dem drehbaren Roboterglied dagegen vorzugsweise parallel zu der dritten Roboterachse zwischen den beiden verdrehbaren Armteilen des proximalen Roboterarms, wenn der proximale Roboterarm vertikal ausgerichtet ist.

Es besteht jedoch alternativ auch die Möglichkeit, dass sich die erste Achse und die dritte Achse schneiden, beispielsweise mit einem Winkel von 1°-45°, 2°-35°, 5°-25° oder 10°-20°.

Bei dem bevorzugten Ausführungsbeispiel der Erfindung ist das drehbare Roboterglied durch einen zweiten Lagerring drehbar mit der Roboterbasis verbunden. Die Leitungsanordnung tritt hierbei aus dem Innenraum der Roboterbasis aus und wird dann außerhalb des zweiten Lagerrings und außerhalb der Roboterbasis zu dem drehbaren Roboterglied geführt. Hierbei bildet die Leitungsanordnung zwischen der Roboterbasis und dem drehbaren Roboterglied vorzugsweise einen Leitungskrümmer mit einer Krümmung von ca. 90°.

Das drehbare Roboterglied weist hierbei vorzugsweise zwei seitliche Haltearme auf, zwischen denen der proximale Roboterarm schwenkbar montiert ist. Die Leitungsanordnung ist hierbei von der Roboterbasis kommend von unten im Wesentlichen vertikal nach oben zwischen die beiden Haltearme des drehbaren Robotergliedes geführt und tritt dort in den proximalen Roboterarm ein.

Hinter dem ersten Lagerring zwischen den beiden verdrehbaren Armteilen des proximalen Roboterarms verlässt die Leitungsanordnung dann wieder den proximalen Roboterarm nach außen und ist dann außerhalb des Beschichtungsroboters zu dem distalen Roboterarm geführt. Die Leitungsanordnung tritt dann von dem proximalen Roboterarm kommend von außen wieder in den distalen Roboterarm ein.

Schließlich wird die Leitungsanordnung dann im Inneren des distalen Roboterarms und der Roboterhandachse zu dem Anschlussflansch für das Applikationsgerät (z. B. Rotationszerstäuber) geführt.

Die Leitungsanordnung ist von der Roboterbasis zu dem drehbaren Roboterglied vorzugsweise so geführt, dass die Leitungsanordnung die zweite Achse schneidet, insbesondere rechtwinklig, was sich als vorteilhaft erwiesen hat.

Zu den im Rahmen dieser Beschreibung verwendeten Lagebezeichnungen "vor" und "hinter" ist zu bemerken, dass sich diese Lagebezeichnungen auf die kinematische Abfolge der einzelnen Roboterkomponenten entlang der seriellen Roboterkinematik beziehen. Die Roboterbasis ist also in diesem Sinne vor den Roboterarmen angeordnet, während die Roboterhandachse hinter den Roboterarmen befindet.

Vorzugsweise umfasst die Leitungsanordnung Elektroleitungen und Fluidleitungen. Die Fluidleitungen können beispielsweise eine Antriebsluftleitung, eine Bremsluftleitung, eine Lenkluftleitung, eine Lagerluftleitung oder eine Farbleitung für Lack umfassen. Die Elektroleitung kann dagegen beispielsweise eine Hochspannungsleitung zur elektrostatischen Beschichtungsmittelaufladung oder eine Sensorleitung zur Abfrage eines Sensors in dem Applikationsgerät umfassen, um nur einige Beispiele zu nennen.

Es wurde bereits vorstehend ausgeführt, dass die Leitungsanordnung durch den ersten Lagerring zwischen den verdrehbaren Armteilen des proximalen Roboterarms hindurchgeführt ist. In dem bevorzugten Ausführungsbeispiel weist der erste Lagerring zwei Leitungsdurchführungen auf, nämlich eine erste Leitungsdurchführung für die Elektroleitungen und eine davon getrennte zweite Leitungsdurchführung für die Fluidleitungen.

Die erste Leitungsdurchführung für die Elektroleitungen ist hierbei in dem ersten Lagerring vorzugsweise zentrisch angeordnet, während die zweite Leitungsdurchführung für die Fluidleitungen in dem ersten Lagerring vorzugsweise exzentrisch angeordnet ist.

Bei der Anordnung von Elektromotoren in dem Beschichtungsroboter ist in der Praxis eine Explosionsschutzkapselung erforderlich, die in der Regel einen Luftaustausch zwischen den Innenräumen der beiden Armteile des proximalen Roboterarms voraussetzt. Die erste Leitungsdurchführung für die Elektroleitungen ist deshalb vorzugsweise so ausgebildet, dass ein solcher Luftaustausch ermöglicht wird.

Allgemein ist zu der Roboterkinematik zu erwähnen, dass das drehbare Roboterglied vorzugsweise an der Oberseite der Roboterbasis angeordnet ist. Es besteht jedoch im Rahmen der Erfindung grundsätzlich auch die Möglichkeit, dass das drehbare Roboterglied an der Unterseite der Roboterbasis oder seitlich neben der Roboterbasis angeordnet ist.

Ferner ist zu erwähnen, dass die erste Achse zwischen dem drehbaren Roboterglied und der Roboterbasis vorzugsweise im Wesentlichen senkrecht ausgerichtet ist. Es besteht jedoch im Rahmen der Erfindung auch die Möglichkeit, dass die erste Achse waagerecht oder schräg ausgerichtet ist.

Die zweite Achse zwischen dem proximalen Roboterarm und dem drehbaren Roboterglied ist dagegen bei dem bevorzugten Ausführungsbeispiel im Wesentlichen waagerecht ausgerichtet. Es besteht jedoch im Rahmen der Erfindung auch die Möglichkeit, dass die zweite Achse senkrecht oder schräg ausgerichtet ist.

Bei dem bevorzugten Ausführungsbeispiel der Erfindung ist die erste Achse also senkrecht ausgerichtet, während die zweite Achse waagerecht ausgerichtet ist.

Weiterhin ist zu der Roboterbasis zu erwähnen, dass die Roboterbasis vorzugsweise ortsfest angeordnet ist, beispielsweise an einer Kabinenwand einer Lackierkabine, an einer Montagesäule oder an einem Montagerahmen. Alternativ besteht jedoch auch die Möglichkeit, dass die Roboterbasis an einer Verfahrschiene angeordnet und entlang der Verfahrschiene verfahrbar ist.

In dem bevorzugten Ausführungsbeispiel der Erfindung ist der erste Lagerring zwischen den beiden verdrehbaren Armteilen des proximalen Roboterarms Bestandteil eines Hohlwellengetriebes und wird über ein Vorgelegegetriebe angetrieben. Vorzugsweise ist das Vorgelegegetriebe radial außen an das Hohlwellengetriebe angeflanscht, wobei die Abtriebswelle des Vorgelegegetriebes parallel zu der dritten Achse verläuft.

Das Vorgelegegetriebe ist vorzugsweise innerhalb des proximalen Roboterarms angeordnet, beispielsweise innerhalb des distalen Armteils des proximalen Roboterarms. Vorzugsweise weist der proximale Roboterarm deshalb eine Explosionsschutzkapselung auf, insbesondere im Bereich des distalen Armteils des proximalen Roboterarms, wo das Vorgelegegetriebe angeordnet ist.

Bei dem erfindungsgemäßen Beschichtungsroboter können an dem distalen Roboterarm oder innerhalb des distalen Roboterarms auch applikationstechnische Bauteile montiert sein, wie beispielsweise ein Farbwechsler, eine Dosierpumpe, Beschichtungsmittelventile, ein Farbdruckregler oder ein Hochspannungsgenerator, um nur einige Beispiele zu nennen. Für die Montage eines Farbwechslers in dem distalen Roboterarm eignet sich besonders ein Linearfarbwechsler, wie er beispielsweise aus DE 10 2008 015 228 A1 bekannt ist.

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Figuren näher erläutert. Es zeigen:
- Figur 1: eine Seitenansicht eines erfindungsgemäßen Lackierroboters,

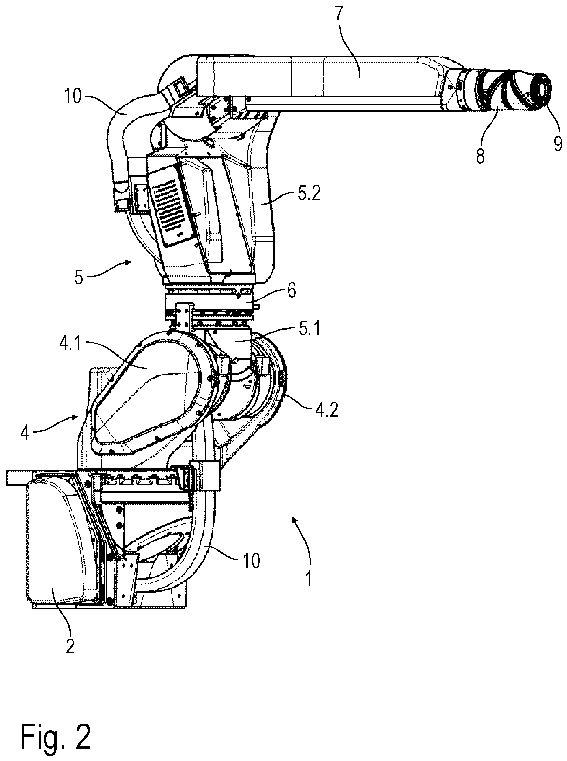

- Figur 2: eine Perspektivansicht des Lackierroboters aus Figur 1,
- Figur 3: ein Hohlwellengetriebe des Lackierroboters aus den Figuren 1 und 2 mit einem Vorgelegegetriebe,
- Figur 4: das Hohlwellengetriebe aus Figur 3 mit Elektroleitungen, die durch das Hohlwellengetriebe hindurchgeführt sind,
- Figur 5: das Hohlwellengetriebe aus Figur 3 mit Fluidleitungen, die durch das Hohlwellengetriebe hindurchgeführt sind, sowie
- Figur 6: eine Querschnittsansicht durch das Hohlwellengetriebe mit den Elektroleitungen und den Fluidleitungen

Die Zeichnungen zeigen verschiedene Ansichten eines erfindungsgemäßen Lackierroboters 1, der beispielsweise in einer Lackieranlage zur Lackierung von Kraftfahrzeugkarosseriebauteilen verwendet werden kann.

Der Lackierroboter 1 weist zunächst eine Roboterbasis 2 auf, die mit ihrem Montageflansch 3 ortsfest montiert ist, beispielsweise an einer seitlichen Kabinenwand einer Lackierkabine, an einem Montagerahmen oder an einer Montagesäule.

An der Oberseite der Roboterbasis ist ein drehbares Roboterglied 4 angeordnet, das relativ zu der Roboterbasis 2 um eine senkrechte Achse A1 drehbar ist.

Das drehbare Roboterglied 4 weist zwei seitliche Haltearme 4.1, 4.2 auf, zwischen denen ein proximaler Roboterarm 5 ("Arm 1") schwenkbar angeordnet ist, wobei der proximale Roboterarm 5 relativ zu dem drehbaren Roboterglied 4 um eine horizontale zweite Achse A2 schwenkbar ist.

Die beiden Achsen A1 und A2 sind hierbei im mathematischen Sinne windschief, d. h. die Achsen A1 und A2 schneiden sich nicht und verlaufen nicht parallel zueinander. Hierbei sind die Achsen A1 und A2 in einem Achsabstand (im mathematischen Sinne das Gemeinlot) a=30cm angeordnet.

Der proximale Roboterarm 5 besteht aus zwei Armteilen 5.1, 5.2, die relativ zueinander um eine Achse A3 drehbar sind, wobei die Achse A3 im Wesentlichen mit der Längsachse des proximalen Roboterarms 5 übereinstimmt. Hierzu sind die beiden Armteile 5.1, 5.2 des proximalen Roboterarms 5 mittels eines Lagerrings 6 miteinander verbunden, wobei der Lagerring 6 die Drehung der beiden Armteile 5.1, 5.2 relativ zueinander ermöglicht.

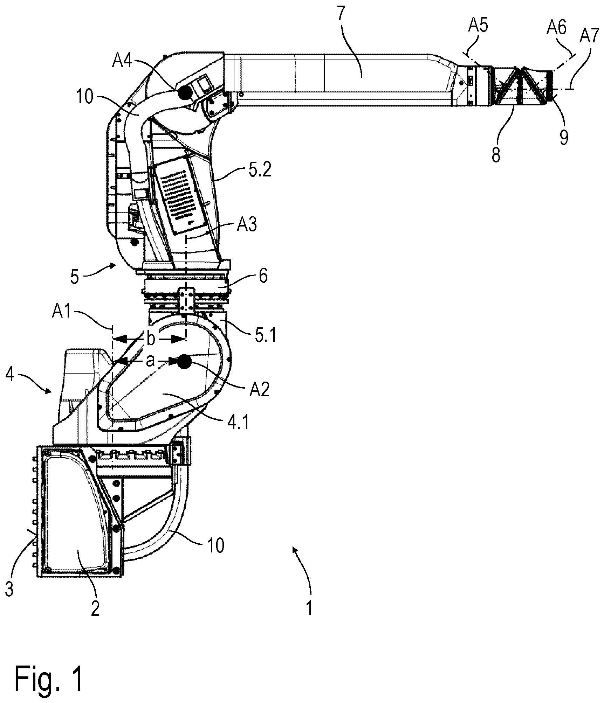

Bei einer vertikalen Ausrichtung des proximalen Roboterarms 5 - wie in Figur 1 dargestellt - sind die beiden Achsen A1 und A3 in einem Achsabstand b=30cm angeordnet.

Weiterhin verfügt der Lackierroboter 1 über einen distalen Roboterarm 7, der in der üblichen Fachterminologie der Robotertechnik auch als "Arm 2" bezeichnet wird. Der distale Roboterarm 7 ist am Ende des proximalen Roboterarms 5 angebracht und um eine Achse A4 schwenkbar.

In dem distalen Roboterarm 7 können applikationstechnische Bauteile angebracht sein, wie beispielsweise ein Farbwechsler (z. B. Linearfarbwechsler), eine Dosierpumpe, ein Farbdruckregler, Beschichtungsmittelventile oder ein Hochspannungsgenerator.

Der distale Roboterarm 7 trägt an seinem Ende eine herkömmliche Roboterhandachse 8 mit drei weiteren beweglichen Achsen A5, A6, A7.

An ihrem freien Ende weist die Roboterhandachse 8 einen Anschlussflansch 9 zur Montage eines Applikationsgeräts (z. B. Rotationszerstäuber) auf.

Von der Roboterbasis 2 ist hierbei eine Leitungsanordnung 10 zu dem Anschlussflansch 9 der Roboterhandachse 8 geführt, um das angeschlossene Applikationsgerät zu versorgen.

Die Leitungsanordnung 10 tritt zunächst in waagerechter Richtung aus der Roboterbasis 2 aus und ist dann in einem 90°-Winkel nach oben geführt, wo die Leitungsanordnung dann zwischen die beiden Armteile 4.1, 4.2 des drehbaren Roboterglieds 4 geführt ist. Dort tritt die Leitungsanordnung 10 dann in das Armteil 5.1 des proximalen Roboterarms 5 ein. Die Leitungsanordnung ist dann durch den Lagerring 6 zwischen den beiden verdrehbaren Armteilen 5.1, 5.2 hindurchgeführt und verlässt das Armteil 5.2 dann wieder nach außen. Die Leitungsanordnung 10 tritt dann im Bereich der Achse A4 wieder in den distalen Roboterarm 7 ein und wird dann innerhalb des distalen Roboterarms 7 und der Roboterhandachse 8 bis zu dem Anschlussflansch 9 geführt.

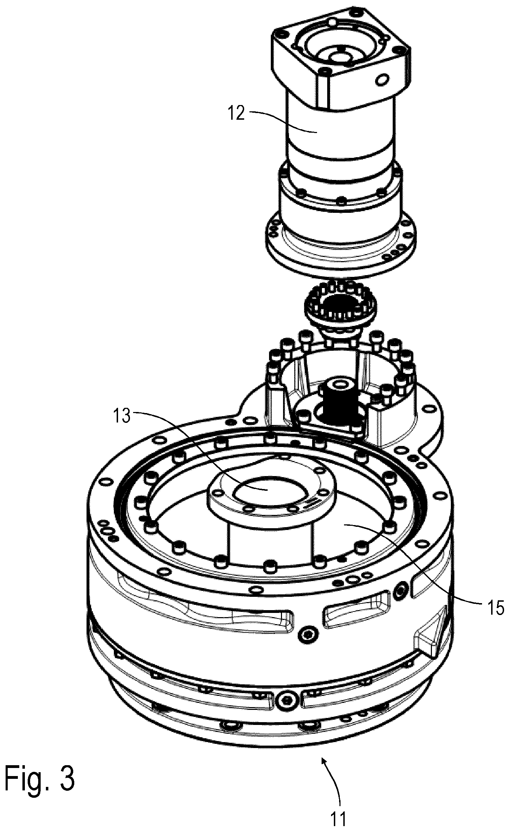

Figur 3 zeigt ein Hohlwellengetriebe 11, das zwischen den beiden verdrehbaren Armteilen 5.1, 5.2 des proximalen Roboterarms 5 angeordnet ist und das den Lagerring 6 beinhaltet. An das Hohlwellengetriebe 11 ist radial außen ein Vorgelegegetriebe 12 angeflanscht, um das Hohlwellengetriebe 11 anzutreiben und dadurch die beiden Armteile 5.1, 5.2 des proximalen Roboterarms 5 relativ zueinander zu drehen.

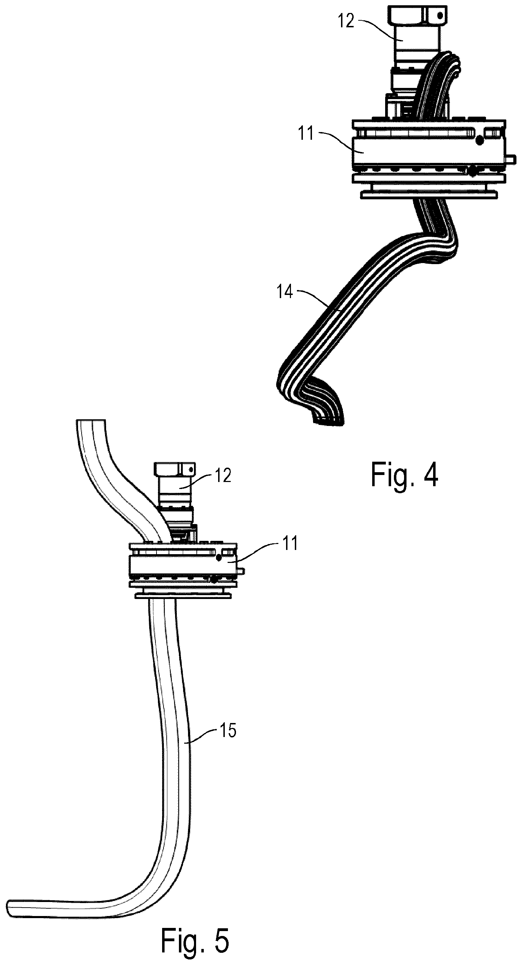

In dem Hohlwellengetriebe befindet sich zentrisch eine erste Leitungsdurchführung zur Aufnahme von Elektroleitungen 14 (vgl. Figur 4).

Weiterhin befindet sich in dem Hohlwellengetriebe 11 exzentrisch eine weitere Leitungsdurchführung 15 für Fluidleitungen 16 (vgl. Figur 5).

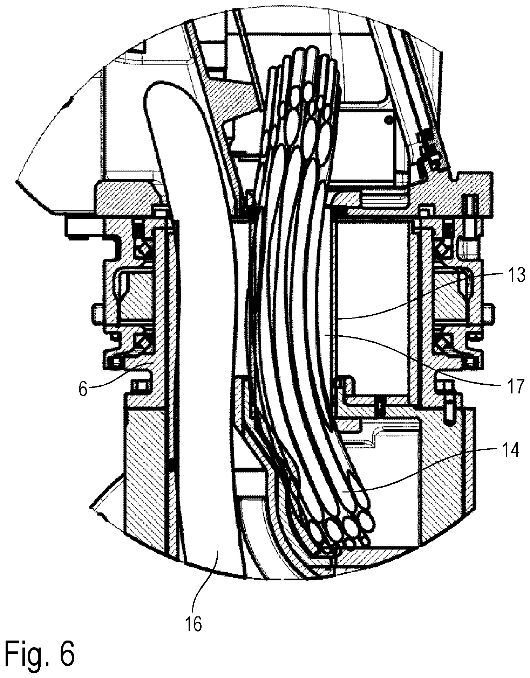

Aus der Querschnittsansicht in Figur 6 ist weiterhin ersichtlich, dass die Leitungsdurchführung 13 für die Elektroleitungen 14 einen Luftspalt 17 freilässt, um einen Luftaustausch zwischen den Innenräumen der Armteile 5.1, 5.2 des proximalen Roboterarms 5 zu ermöglichen, was im Rahmen einer Explosionsschutzkapselung wichtig ist.

Der erfindungsgemäße Lackierroboter 1 weist die folgenden Vorteile auf:
- Die Beweglichkeit des siebenachsigen Lackierroboters 1 ist größer als bei einem herkömmlichen sechsachsigen Lackierroboter ohne die Achse A3.
- Der siebenachsige Lackierroboter 1 kann wie ein herkömmlicher sechsachsiger Lackierroboter programmiert werden. Durch die zusätzliche Achse A3 kann der Lackierroboter 1 jedoch Hindernissen bei gleichem Bahnverlauf ausweichen bzw. prozessoptimal Arme und Achsgelenke zusätzlich bewegen und positionieren ohne die geforderte Bahn und Orientierung zu verlassen.
- Die Leitungsanordnung 10 verläuft im Wesentlichen in der sogenannten neutralen Faser der Roboterachse und wird deshalb bei einer Roboterbewegung mechanisch nur minimal belastet.
- Die Fluidleitungen 16 sind räumlich von den Elektroleitungen 14 und dem Vorgelegegetriebe 12 getrennt.
- Die Leitungsanordnung 10 kann mehr als 50 Fluidleitungen 16 für Lack enthalten, wobei die einzelnen Fluidleitungen einen Außendurchmesser von 9mm aufweisen können.
- Die Leitungsanordnung 10 zeichnet sich durch weiche Übergänge aus und ist vor Knicken, Abrieb und Verformungen geschützt.
- Der siebenachsige Lackierroboter 1 ermöglicht im Vergleich zu herkömmlichen sechsachsigen Lackierrobotern größere Schwenkwinkel in den Haupt- und Handachsen.
- Bei dem Lackierroboter 1 sind eventuelle Leckagen der Fluidleitungen 16 einfach durch Austausch der defekten Leitungsanordnung 10 behebbar.
- Bei eventuellen Leckagen in den Fluidleitungen 16 fließt die Leckage aufgrund der Schwerkraft nach unten in die Lackierkabine.
- Die Leitungsanordnung 10 steht nicht oder nur kaum über die Außenkontur des Lackierroboters 1 heraus und weist eine sehr kurze Installationsstrecke auf.
- Der siebenachsige Lackierroboter 1 ist bauähnlich zu einem herkömmlichen sechsachsigen Lackierroboter und ermöglicht die gleichen Prozessfunktionen und Applikationstechniken.
- Bei dem Lackierroboter 1 treten die gleichen Isolierabstände auf dem distalen Roboterarm 7 auf, was bei einer elektrostatischen Beschichtungsmittelaufladung wichtig ist.
- Der siebenachsige Lackierroboter 1 weist die gleiche Tragfähigkeit auf wie ein herkömmlicher sechsachsiger Lackierroboter.
- Der siebenachsige Lackierroboter 1 kann wie herkömmliche sechsachsige Lackierroboter montiert werden, d. h. beispielsweise ortsfest oder entlang einer Verfahrschiene verfahrbar.
- Der siebenachsige Lackierroboter 1 weist mit einem herkömmlichen sechsachsigen Lackierroboter viele Gleichteile auf, was bei einer parallelen Herstellung der siebenachsigen Lackierroboter 1 und der sechsachsigen Lackierroboter die Herstellungskosten senkt, da größere Stückzahlen der Gleichteile möglich sind.

Die Erfindung ist nicht auf das vorstehend beschriebene bevorzugte Ausfuhrungsbeispiel begrenzt und beansprucht Schutz für den Gegenstand der folgenden Ansprüche.

### Bezugszeichenliste:

- 1: Lackierroboter
- 2: Roboterbasis
- 3: Montageflansch der Roboterbasis
- 4: Drehbares Roboterglied
- 4.1, 4.2: Haltearme des drehbaren Roboterglieds
- 5: Proximaler Roboterarm
- 5.1: Proximales Armteil des proximalen Roboterarms
- 5.2: Distales Armteil des proximalen Roboterarms
- 6: Lagerring zwischen den Armteilen des proximalen Roboterarms
- 7: Distaler Roboterarm
- 8: Roboterhandachse
- 9: Anschlussflansch der Roboterhandachse
- 10: Leitungsanordnung
- 11: Hohlwellengetriebe
- 12: Vorgelegegetriebe
- 13: Zentrische Leitungsdurchführung für Elektroleitungen
- 14: Elektroleitungen
- 15: Exzentrische Leitungsdurchführung für Fluidleitungen
- 16: Fluidleitungen
- 17: Luftspalt in der Leitungsdurchführung für Elektroleitungen für Luftaustausch
- a: Achsabstand zwischen den Achsen A1 und A2
- b: Achsabstand zwischen den Achsen A1 und A3
- A1-A7: Bewegliche Achsen

## Patentansprüche

1. Beschichtungsroboter (1) zur Beschichtung von Bauteilen, insbesondere Lackierroboter (1) zur Lackierung von Kraftfahrzeugkarosseriebauteilen, mit
a) einer Roboterbasis (2),
b) einem drehbaren Roboterglied (4), das an der Roboterbasis (2) angebracht ist und relativ zu der Roboterbasis (2) um eine erste Achse (A1) drehbar ist,
c) einem proximalen Roboterarm (5), der an dem drehbaren Roboterglied (4) angebracht und relativ zu dem drehbaren Roboterglied (4) um eine zweite Achse (A2) schwenkbar ist, wobei der proximale Roboterarm (5) zwei Armteile (5.1, 5.2) aufweist, die mittels eines ersten Lagerrings (6) relativ zueinander um eine dritte Achse (A3) drehbar sind, die im Wesentlichen entlang der Längsachse des proximalen Roboterarms (5) ausgerichtet ist,
d) einem distalen Roboterarm (7), der an dem proximalen Roboterarm (5) angebracht ist und relativ zu dem proximalen Roboterarm (5) um eine vierte Achse (A4) schwenkbar ist,
e) einer Roboterhandachse (8), die an dem distalen Roboterarm (7) angebracht ist und mehrere, insbesondere drei bewegliche Achsen (A5, A6, A7) aufweist,
f) einem Anschlussflansch (9) am freien Ende der Roboterhandachse (8) zum Anschluss eines Applikationsgeräts, insbesondere eines Rotationszerstäubers, und
g) mindestens einer Leitungsanordnung (10), die von der Roboterbasis (2) zu dem Anschlussflansch (9) für das Applikationsgerät geführt ist,
h) wobei die Leitungsanordnung (10) durch den ersten Lagerring (6) zwischen den beiden Armteilen (5.1, 5.2) des proximalen Roboterarms (5) hindurchgeführt ist,
i) während die Leitungsanordnung (10) den proximalen Roboterarm (5) hinter dem ersten Lagerring (6) wieder verlässt und außen zu dem distalen Roboterarm (7) geführt ist,
**dadurch gekennzeichnet,**
j) **dass** die Leitungsanordnung (10) von dem proximalen Roboterarm (5) kommend von außen in den distalen Roboterarm (7) hineingeführt ist, und
k) **dass** die Leitungsanordnung (10) im Inneren des distalen Roboterarms (7) und der Roboterhandachse (8) zu dem Anschlussflansch (8) geführt ist.

2. Beschichtungsroboter (1) nach Anspruch 1,
**dadurch gekennzeichnet,**
a) **dass** die erste Achse (A1) und die zweite Achse (A2) im mathematischen Sinne windschief sind mit einem Achsabstand (a) im Bereich von 10cm-55cm, 20cm-45cm oder 25cm-35cm, insbesondere 30cm, und/oder
b) **dass** die beiden Armteile (5.1, 5.2) des proximalen Roboterarms (5) relativ zueinander verdrehbar sind mit einem Drehwinkelbereich von mindestens 90°, 135°, 180°, 225° oder mindestens 240°.

3. Beschichtungsroboter (1) nach einem der vorhergehenden Ansprüche, **dadurch gekennzeichnet,**
a) **dass** das drehbare Roboterglied (4) durch einen zweiten Lagerring mit der Roboterbasis (2) verbunden ist, und
b) **dass** die Leitungsanordnung (10) aus der Roboterbasis (2) austritt und außerhalb des zweiten Lagerrings und außerhalb der Roboterbasis (2) zu dem drehbaren Roboterglied (4) geführt ist.

4. Beschichtungsroboter (1) nach einem der vorhergehenden Ansprüche, **dadurch gekennzeichnet,**
a) **dass** das drehbare Roboterglied (4) zwei seitliche Haltearme (4.1, 4.2) aufweist,
b) **dass** der proximale Roboterarm (5) zwischen den beiden Haltearmen (4.1, 4.2) des drehbaren Roboterglied (4) schwenkbar montiert ist, und
c) **dass** die Leitungsanordnung (10) von der Roboterbasis (2) kommend von unten nach oben zwischen die beiden Haltearme (4.1, 4.2) des drehbaren Roboterglieds (4) geführt ist und dort in den proximalen Roboterarm (5) eintritt.

5. Beschichtungsroboter (1) nach einem der vorhergehenden Ansprüche, **dadurch gekennzeichnet, dass** die Leitungsanordnung (10) die zweite Achse (A2) schneidet, insbesondere rechtwinklig.

6. Beschichtungsroboter (1) nach einem der vorhergehenden Ansprüche, **dadurch gekennzeichnet,**
a) **dass** die Leitungsanordnung (10) Elektroleitungen (14) und Fluidleitungen (16) umfasst, und
b) **dass** die Fluidleitungen (16) folgende Fluidleitungen (16) umfassen:
b1) mindestens eine Antriebsluftleitung für Antriebsluft zum Antrieb einer Druckluftturbine des Rotationszerstäubers,
b2) mindestens eine Bremsluftleitung für Bremsluft zum Abbremsen einer Druckluftturbine des Rotationszerstäubers,
b3) mindestens eine Lenkluftleitung für Lenkluft zur Formung eines Sprühstrahls des Rotationszerstäubers, und/oder
b4) mindestens eine Lagerluftleitung für Lagerluft für ein Luftlager des Rotationszerstäubers, und/oder
b5) mindestens eine Farbleitung für Lack, und
c) **dass** die Elektroleitungen (14) folgende Elektroleitungen umfassen:
c1) eine Erdungsleitung für Applikationsgeräte, und/oder
c2) eine Sensorleitung zur Abfrage eines Sensors in dem Applikationsgerät.

7. Beschichtungsroboter (1) nach Anspruch 6, **dadurch gekennzeichnet,**
a) **dass** der erste Lagerring (6) zwischen den beiden Armteilen (5.1, 5.2) des proximalen Roboterarms (5) eine erste Leitungsdurchführung (13) für die Elektroleitungen (14) aufweist, und
b) **dass** der erste Lagerring (6) zwischen den beiden Armteilen (5.1, 5.2) des proximalen Roboterarms (5) eine getrennte zweite Leitungsdurchführung (15) für die Fluidleitungen (16) aufweist.

8. Beschichtungsroboter (1) nach Anspruch 7, **dadurch gekennzeichnet,**
a) **dass** die erste Leitungsdurchführung (13) für die Elektroleitungen (14) in dem ersten Lagerring (6) zentrisch angeordnet ist, und
b) **dass** die zweite Leitungsdurchführung (15) für die Fluidleitungen (16) in dem ersten Lagerring (6) exzentrisch angeordnet ist.

9. Beschichtungsroboter (1) nach Anspruch 7 oder 8, **dadurch gekennzeichnet, dass** die erste Leitungsdurchführung (13) für die Elektroleitungen (14) auch einen Luftaustausch zwischen den Innenräumen der beiden Armeteile (5.1, 5.2) des proximalen Roboterarms (5) ermöglicht.

10. Beschichtungsroboter (1) nach einem der vorhergehenden Ansprüche, **dadurch gekennzeichnet,**
a) **dass** das drehbare Roboterglied (4) an der Oberseite der Roboterbasis (2) angeordnet ist, oder
b) **dass** das drehbare Roboterglied (4) an der Unterseite der Roboterbasis (2) angeordnet ist, oder
c) **dass** das drehbare Roboterglied (4) an der Seite der Roboterbasis (2) angeordnet ist.

11. Beschichtungsroboter (1) nach einem der vorhergehenden Ansprüche, **dadurch gekennzeichnet,**
a) **dass** die erste Achse (A1) im Wesentlichen senkrecht oder im Wesentlichen waagerecht ausgerichtet ist, und/oder
b) **dass** die zweite Achse (A2) im Wesentlichen waagerecht oder im Wesentlichen senkrecht ausgerichtet ist, und/oder
c) **dass** die dritte Achse (A3) im Wesentlichen senkrecht oder im Wesentlichen waagerecht ausgerichtet ist oder ausgerichtet werden kann.

12. Beschichtungsroboter (1) nach einem der vorhergehenden Ansprüche, **dadurch gekennzeichnet,**
a) **dass** die Roboterbasis (2) ortsfest angeordnet ist, insbesondere
a1) an einer Kabinenwand einer Lackierkabine oder
a2) an einer Montagesäule oder
a3) an einem Montagerahmen, oder
b) **dass** die Roboterbasis (2) an einer Verfahrschiene angebracht und entlang der Verfahrschiene verfahrbar ist.

13. Beschichtungsroboter (1) nach einem der vorhergehenden Ansprüche, **dadurch gekennzeichnet, dass** der erste Lagerring (6) zwischen den beiden Armteilen (5.1, 5.2) des proximalen Roboterarms (5) Bestandteil eines Hohlwellengetriebes (11) ist.

14. Beschichtungsroboter (1) nach Anspruch 13,
**dadurch gekennzeichnet,**
a) **dass** an das Hohlwellengetriebe (11) radial außen ein Vorgelegegetriebe (12) angeflanscht ist mit einer Abtriebswelle parallel zu der dritten Achse (A3), und/oder
b) **dass** ein Antriebsmotor innerhalb des proximalen Roboterarms (5) angeordnet ist, insbesondere innerhalb des distalen Armteils (5.2) des proximalen Roboterarms (5), und/oder
c) **dass** der proximale Roboterarm (5) eine Explosionsschutzkapselung aufweist, insbesondere im Bereich des distalen Armteils (5.2) des proximalen Roboterarms (5).

15. Beschichtungsroboter (1) nach einem der vorhergehenden Ansprüche, **dadurch gekennzeichnet, dass** an dem distalen Roboterarm (7) oder innerhalb des distalen Roboterarms (7) oder an oder in dem proximalen Roboterarm (5) applikationstechnische Bauteile montiert sind, insbesondere:
a) ein Farbwechsler, insbesondere ein Linearfarbwechsler,
b) eine Dosierpumpe zur Dosierung des zu applizierenden Beschichtungsmittels,
c) Beschichtungsmittelventile, und/oder
d) ein Hochspannungsgenerator zur elektrostatischen Beschichtungsmittelaufladung.

## Claims

1. Coating robot (1) for coating components, in particular painting robot (1) for painting motor vehicle body components, with
a) a robot base (2),
b) a rotatable robot member (4) mounted on the robot base (2) and rotatable about a first axis (A1) relative to the robot base (2),
c) a proximal robot arm (5) mounted on the rotatable robot member (4) and pivotable relative to the rotatable robot member (4) about a second axis (A2), the proximal robot arm (5) having two arm parts (5.1, 5.2) which are rotatable relative to each other about a third axis (A3) by means of a first bearing ring (6) which is aligned substantially along the longitudinal axis of the proximal robot arm (5) (5),
d) a distal robot arm (7) attached to the proximal robot arm (5) and pivotable about a fourth axis (A4) relative to the proximal robot arm (5),
e) a robot hand axis (8) which is attached to the distal robot arm (7) and has several, in particular three movable axes (A5, A6, A7),
f) a connecting flange (9) at the free end of the robot hand axis (8) for connecting an application device, in particular a rotary atomizer, and
g) at least one line arrangement (10) which is guided from the robot base (2) to the connecting flange (9) for the application device,
h) wherein the line arrangement (10) is guided through the first bearing ring (6) between the two arm parts (5.1, 5.2) of the proximal robot arm (5),
i) while the line arrangement (10) leaves the proximal robot arm (5) behind the first bearing ring (6) again and is guided outside to the distal robot arm (7),
**characterized in that**
j) the line arrangement (10), coming from the proximal robot arm (5), is guided into the distal robot arm (7) from the outside, and
k) the line arrangement (10) is guided inside the distal robot arm (7) and the robot hand axis (8) to the connecting flange (8).

2. Coating robot (1) according to claim 1,
**characterized in that,**
a) the first axis (A1) and the second axis (A2) are skew in a mathematical sense with an axial distance (a) in the range of 10cm-55cm, 20cm-45cm or 25cm-35cm, in particular 30cm, and/or
b) the two arm parts (5.1, 5.2) of the proximal robot arm (5) can be rotated relative to one another with a rotation angle range of at least 90°, 135°, 180°, 225° or at least 240°.

3. Coating robot (1) according to one of the preceding claims, **characterized in that**
a) the rotatable robot member (4) is connected to the robot base (2) by a second bearing ring, and
b) the line arrangement (10) exits the robot base (2) and is guided outside the second bearing ring and outside the robot base (2) to the rotatable robot member (4).

4. Coating robot (1) according to one of the preceding claims, **characterized in that**
a) the rotatable robot member (4) has two lateral holding arms (4.1, 4.2),
b) the proximal robot arm (5) is pivotably mounted between the two holding arms (4.1, 4.2) of the rotatable robot member (4), and
c) the line arrangement (10) is guided from the robot base (2) from bottom to top between the two holding arms (4.1, 4.2) of the rotatable robot member (4) and enters the proximal robot arm (5) there.

5. Coating robot (1) according to one of the preceding claims, **characterized in that** the line arrangement (10) intersects the second axis (A2), in particular at right angles.

6. Coating robot (1) according to one of the preceding claims, **characterized in that**
a) the line arrangement (10) comprises electrical lines (14) and fluid lines (16), and
b) the fluid lines (16) comprise the following fluid lines (16) :
b1) at least one drive air line for drive air to drive a compressed air turbine of the rotary atomizer,
b2) at least one brake air line for brake air for braking a compressed air turbine of the rotary atomizer,
b3) at least one shaping air duct for shaping air to form a spray jet of the rotary atomizer, and/or
b4) at least one bearing air line for bearing clearance for an air bearing of the rotary atomizer, and/or
b5) at least one paint line for paint, and/
c) the electrical cables (14) comprise the following electrical cables:
c1) one earthing cable for application equipment, and/or
c2) a sensor cable for sensing a sensor in the application device.

7. Coating robot (1) according to claim 6,
**characterized in that**
a) the first bearing ring (6) has a first cable bushing (13) for the electrical cables (14) between the two arm parts (5.1, 5.2) of the proximal robot arm (5), and
b) the first bearing ring (6) between the two arm parts (5.1, 5.2) of the proximal robot arm (5) has a separate second line bushing (15) for the fluid lines (16).

8. Coating robot (1) according to claim 7,
**characterized in that**
a) the first cable bushing (13) for the electrical cables (14) is arranged centrally in the first bearing ring (6), and
b) the second line bushing (15) for the fluid lines (16) is arranged eccentrically in the first bearing ring (6).

9. Coating robot (1) according to Claim 7 or 8, **characterized in that** the first cable bushing (13) for the electric cables (14) also permits an exchange of air between the inner spaces of the two arm parts (5.1, 5.2) of the proximal robot arm (5).

10. Coating robot (1) according to one of the preceding claims, **characterized in that**
a) the rotatable robot member (4) is arranged at the top of the robot base (2), or
b) the rotatable robot member (4) is arranged on the underside of the robot base (2), or
c) the rotatable robot member (4) is arranged on the side of the robot base (2).

11. Coating robot (1) according to one of the preceding claims, **characterized in that**
a) the first axis (A1) is substantially perpendicular or substantially horizontal, and/or
b) the second axis (A2) is substantially horizontal or substantially vertical, and/or
c) the third axis (A3) is or can be aligned substantially vertically or substantially horizontally.

12. Coating robot (1) according to one of the preceding claims, **characterized in that**
a) the robot base (2) is fixedly arranged, in particular
a1) on a cabin wall of a spray booth or
a2) on a mounting column or
a3) on a mounting frame, or
b) the robot base (2) is mounted on a traversing rail and can be moved along the traversing rail.

13. A coating robot (1) according to one of the preceding claims, **characterized in that** the first bearing ring (6) between the two arm parts (5.1, 5.2) of the proximal robot arm (5) is part of a hollow shaft gear unit (11).

14. Coating robot (1) according to claim 13,
**characterized in that**
a) a countershaft gear (12) is flanged radially on the outside of the hollow shaft gear (11) with an output shaft parallel to the third axis (A3), and/or
b) the a drive motor is arranged inside the proximal robot arm (5), in particular inside the distal arm part (5.2) of the proximal robot arm (5), and/or
c) the proximal robot arm (5) has an explosion protection enclosure, in particular in the region of the distal arm part (5.2) of the proximal robot arm (5).

15. Coating robot (1) according to one of the preceding claims, **characterized in that** application-technical components, in particular, are mounted on the distal robot arm (7) or inside the distal robot arm (7) or on or in the proximal robot arm (5):
a) a colour changer, in particular a linear colour changer,
b) a dosing pump for dosing the coating agent to be applied,
c) coating agent valves, and/or
d) a high-voltage generator for electrostatic coating agent charging.

## Revendications

1. Robot de revêtement (1) pour le revêtement de composants, plus particulièrement robot de peinture (1) pour la peinture de composants de carrosseries de véhicules automobiles, avec
a) une base de robot (2),
b) un organe de robot rotatif (4) qui est monté sur la base du robot (2) et qui peut tourner par rapport à la base du robot (2) autour d'un premier axe (A1),
c) un bras de robot proximal (5), qui est monté sur l'organe de robot rotatif (4) et qui peut pivoter par rapport à l'organe de robot rotatif (4) autour d'un deuxième axe (A2), dans lequel le bras de robot proximal (5) comprend deux parties de bras (5.1, 5.2) qui peuvent tourner l'un par rapport à l'autre, au moyen d'une première bague de palier (6), autour d'un troisième axe (A3) qui est orienté globalement le long de l'axe longitudinal du bras de robot proximal (5),
d) un bras de robot distal (7), qui est monté sur le bras de robot proximal (5) et qui peut pivoter par rapport au bras de robot proximal (5) autour d'un quatrième axe (A4),
e) un axe de main de robot (8) qui est monté sur le bras de robot distal (7) et qui comprend plusieurs, de préférence trois, axe mobiles (A5, A6, A7),
f) une bride de raccordement (9) à l'extrémité libre de l'axe de la min du robot (8) pour le raccordement d'un appareil d'application, plus particulièrement d'un pulvérisateur rotatif et
g) au moins un système de conduites (10) qui est guidé de la base du robot (2) vers la bride de raccordement (9) pour l'appareil d'application,
h) dans lequel le système de conduites (10) est guidé à travers la première bague de palier (6) entre les deux parties de bras (5.1, 5.2) du bras de robot proximal (5),
i) tandis que le système de conduites (10) quitte à nouveau le bras de robot proximal (5) derrière la première bague de palier (6) et est guidée à l'extérieur vers le bras de robot distal (7),
**caractérisé en ce que**
j) le système de conduites (10) est guidé, à partir du bras de robot proximal (5), de l'extérieur vers le bras de robot distal (7) et
k) le système de conduites (10) est guidé à l'intérieur du bras de robot distal (7) et l'axe de main du robot (8) est guidé vers la bride de raccordement (8).

2. Robot de revêtement (1) selon la revendication 1,
**caractérisé en ce que**
a) le premier axe (A1) et le deuxième axe (A2) sont inclinés au sens mathématique du terme, avec un entraxe (a) de l'ordre de 10 cm à 55 cm, de 20 cm à 45 cm ou de 25 cm à 35 cm, plus particulièrement de 30 cm et/ou
b) les deux parties de bras (5.1, 5.2) du bras de robot proximal (5) peuvent tourner l'un par rapport à l'autre avec une plage d'angle de rotation d'au moins 90°, 135°, 180°, 225° ou d'au moins 240°.

3. Robot de revêtement (1) selon l'une des revendications précédentes, **caractérisé en ce que**
a) l'organe de robot rotatif (4) est relié par une deuxième bague de palier avec la base du robot (2) et
b) le système de conduites (10) sort de la base du robot (2) et est guidé hors de la deuxième bague de palier et hors de la base du robot (2) vers l'organe de robot rotatif (4).

4. Robot de revêtement (1) selon l'une des revendications précédentes, **caractérisé en ce que**
a) l'organe de robot rotatif (4) comprend deux bras de maintien (4.1, 4.2),
b) le bras de robot proximal (5) est monté de manière pivotante entre les deux bras de maintien (4.1, 4.2) de l'organe de robot rotatif (4) et
c) le système de conduites (10) est guidé, à partir de la base du robot (2), du bas vers le haut entre les deux bras de maintien (4.1, 4.2) de l'organe de robot rotatif (4) et entre dans le bras de robot proximal (5).

5. Robot de revêtement (1) selon l'une des revendications précédentes, **caractérisé en ce que** le système de conduites (10) coupe le deuxième axe (A2), plus particulièrement de manière perpendiculaire.

6. Robot de revêtement (1) selon l'une des revendications précédentes, **caractérisé en ce que**
a) le système de conduites (10) comprend des lignes électriques (14) et des conduites de fluides (16) et
b) les conduites de fluides (16) comprennent les conduites de fluides (16) suivantes :
b1) au moins une conduite d'air d'entraînement pour de l'air d'entraînement pour l'entraînement d'une turbine à air comprimé du pulvérisateur rotatif ;
b2) au moins une conduite d'air de freinage pour de l'air de freinage pour le freinage d'une turbine à air comprimé du pulvérisateur rotatif,
b3) au moins une conduite d'air de direction pour la formation d'un jet de pulvérisation du pulvérisateur rotatif et/ou
b4) au moins une conduite d'air de palier pour de l'air de palier pour un palier à air du pulvérisateur rotatif et/ou
b5) au moins une conduite de peinture et
c) les lignes électriques (14) comprennent les lignes électriques suivantes :
c1) une ligne de mise à la terre pour des appareils d'application et/ou
c2) une ligne de capteur pour l'interrogation d'un capteur dans l'appareil d'application.

7. Robot de revêtement (1) selon la revendication 6,
**caractérisé en ce que**
a) la première bague de palier (6) comprend, entre les deux parties de bras (5.1, 5.2) du bras de robot proximal (5), un premier passage de conduite (13) pour les lignes électriques (14) et
b) la première bague de palier (6) comprend, entre les deux parties de bras (5.1, 5.2) du bras de robot proximal (5), un deuxième passage de conduite (15) séparé pour les conduites de fluides (16).

8. Robot de revêtement (1) selon la revendication 7,
**caractérisé en ce que**
a) le premier passage de conduite (13) pour les lignes électriques (14) est disposé de manière centrée dans la première bague de palier (6) et
b) le deuxième passage de conduite (15) pour les conduites de fluides (16) est disposée de manière excentrée dans la première bague de palier (6).

9. Robot de revêtement (1) selon la revendication 7 ou 8, **caractérisé en ce que** le premier passage de conduite (13) pour les lignes électriques (14) permet également un échange d'air entre les espaces internes des deux parties de bras (5.1, 5.2) du bras de robot proximal (5).

10. Robot de revêtement (1) selon l'une des revendications précédentes, **caractérisé en ce que**
a) l'organe de robot rotatif (4) est disposé sur le côté supérieur de la base de robot (2) ou
b) l'organe de robot rotatif (4) est disposé sur le côté inférieur de la base de robot (2) ou
c) l'organe de robot rotatif (4) est disposé sur le côté de la base de robot (2).

11. Robot de revêtement (1) selon l'une des revendications précédentes, **caractérisé en ce que**
a) le premier axe (A1) est orienté de manière globalement verticale ou globalement horizontale et/ou
b) le deuxième axe (A2) est orienté de manière globalement horizontale ou globalement verticale et/ou
c) le troisième axe (A3) est orienté ou peut être orientée de manière globalement verticale ou globalement horizontale.

12. Robot de revêtement (1) selon l'une des revendications précédentes, **caractérisé en ce que**
a) la base du robot (2) est disposé de manière fixe, plus particulièrement
a1) sur une paroi de cabine d'une cabine de peinture ou
a2) sur une colonne de montage ou
a3) sur un châssis de montage ou
b) la base de robot (2) est montée sur un rail de déplacement et est mobile le long du rail de déplacement.

13. Robot de revêtement (1) selon l'une des revendications précédentes, **caractérisé en ce que** la première bague de palier (6) entre les deux parties de bras (5.1, 5.2) du bras de robot proximal (5), fait partie d'un réducteur à arbre creux (11).

14. Robot de revêtement (1) selon la revendication 13,
**caractérisé en ce que**
a) au réducteur à arbre creux (11), est montée, à l'aide d'une bride, radialement à l'extérieur, une transmission intermédiaire (12) avec un arbre de sortie parallèle au troisième axe (A3) et/ou
b) un moteur d'entraînement est disposé à l'intérieur du bras de robot proximal (5), plus particulièrement à l'intérieur de la partie de bras distale (5.2) du bras de robot proximal (5) et/ou
c) le bras de robot proximal (5) comprend une encapsulation anti-déflagration, plus particulièrement au niveau de la partie de bras distale (5.2) du bras de robot proximal (5).

15. Robot de revêtement (1) selon l'une des revendications précédentes, **caractérisé en ce que**, sur le bras de robot distal (7) ou à l'intérieur du bras de robot distal (7) ou sur ou dans le bras de robot proximal (5) sont montés des composants du système d'application, plus particulièrement :
a) un changeur de couleur, plus particulièrement un changeur de couleur linéaire,
b) une pompe de dosage pour le dosage du produit de revêtement à appliquer,
c) des soupapes de produit de revêtement et/ou
d) un générateur de haute tension pour la charge électrostatique du produit de revêtement.
